(19)

Europäisches Patentamt
European Patent Office
Office européen des brevets

(11) **EP 3 109 931 B1**

(12) **EUROPEAN PATENT SPECIFICATION**

(45) Date of publication and mention of the grant of the patent:
**02.01.2019 Bulletin 2019/01**

(21) Application number: **15749099.6**

(22) Date of filing: **09.02.2015**

(51) Int Cl.:
*H01M 8/04* (2016.01)      *H01M 8/18* (2006.01)
*H01M 8/20* (2006.01)      *H01M 8/04276* (2016.01)
*H01M 8/04186* (2016.01)      *H01M 8/04537* (2016.01)
*H01M 8/04746* (2016.01)

(86) International application number:
**PCT/JP2015/053568**

(87) International publication number:
**WO 2015/122390 (20.08.2015 Gazette 2015/33)**

(54) **REDOX FLOW BATTERY SYSTEM AND METHOD FOR OPERATING REDOX FLOW BATTERY**

REDOXFLUSSBATTERIESYSTEM UND VERFAHREN ZUM BETRIEB EINER REDOXFLUSSBATTERIE

SYSTÈME DE BATTERIE RÉDOX ET PROCÉDÉ DE FONCTIONNEMENT DE BATTERIE RÉDOX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.02.2014  JP 2014027932**

(43) Date of publication of application:
**28.12.2016  Bulletin 2016/52**

(73) Proprietor: **Sumitomo Electric Industries, Ltd.**
**Osaka-shi, Osaka 541-0041 (JP)**

(72) Inventors:
• **KUMAMOTO, Takahiro**
  **Osaka-shi**
  **Osaka 554-0024 (JP)**
• **YAMANISHI, Katsuya**
  **Osaka-shi**
  **Osaka 554-0024 (JP)**

• **FUJIKAWA, Kazuhiro**
  **Osaka-shi**
  **Osaka 554-0024 (JP)**

(74) Representative: **Boult Wade Tennant LLP**
**Verulam Gardens**
**70 Gray's Inn Road**
**London WC1X 8BT (GB)**

(56) References cited:
EP-A1- 2 387 092        WO-A1-90/03666
WO-A1-2008/148148        JP-A- H0 412 464
JP-A- S6 070 672        JP-A- S6 345 761
JP-A- H07 192 748        JP-A- S63 166 156
JP-A- 2006 114 359        JP-A- 2006 313 691
JP-A- 2006 351 346        JP-A- 2007 188 729
JP-A- 2007 207 620        JP-A- 2009 016 216
JP-A- 2009 016 218        JP-A- 2009 016 219
JP-A- 2012 160 410        JP-A- 2013 037 856
US-B2- 8 277 964

## Description

Technical Field

The present invention relates to a redox flow battery system and a method for operating a redox flow battery. In particular, the present invention relates to a redox flow battery system and a method for operating a redox flow battery that suppress overcharge and overdischarge of an electrolyte.

Background Art

Redox flow batteries have, for example, the following features: (1) high safety; (2) long charge/discharge cycle life; (3) easy realization of high capacity; and (4) capability of constant monitoring of a state of charge (SOC). Such a redox flow battery can be applied to various types of use. The redox flow battery is used for, in addition to load leveling, compensation for instantaneous voltage drop, emergency power supply, and output leveling of natural energy such as photovoltaic power generation and wind power generation, which are being widely introduced.

The redox flow battery supplies a positive-electrode electrolyte and a negative-electrode electrolyte by circulation to a battery cell, which includes a positive electrode, a negative electrode, and a membrane interposed therebetween, so as to perform charge and discharge. The electrolytes are aqueous solutions containing metal ions (active materials) that undergo changes in valence by oxidation-reduction. Well-known examples of the redox flow battery include an iron ($Fe^{2+}/Fe^{3+}$) -chromium ($Cr^{3+}/Cr^{2+}$) -based redox flow battery using Fe ions as the positive-electrode active material and Cr ions as the negative-electrode active material; and a vanadium ($V^{2+}/V^{3+}$-$V^{4+}/V^{5+}$) -based redox flow battery using V ions as the active materials for the positive electrode and the negative electrode.

In general, in order to circulate the electrolytes in the battery cell, the redox flow battery needs pumps. Thus, there are pumping losses. When operating the redox flow battery while the flow rates (flow amounts of electrolytes) of the pumps are constantly set to fixed values, large pumping losses may be caused, and accordingly, battery efficiency may be decreased. In order to address this, the pumping losses are decreased in the related-art redox flow batteries by adjusting the flow rates of the pumps corresponding to states of charge (may also be referred to as "charge depths") to supply the electrolytes to the battery cell.

For example, Patent Literatures 1 and 2 disclose techniques with which the pumping losses are decreased so as to increase the battery efficiency. Patent Literature 1 describes an operating control of pumps with which a terminal voltage, a load current, the amounts of electrolytes, and an open-circuit voltage of a cell are constantly detected and, based on results of the detection, the pumps are operated at optimum flow rates of the electrolytes corresponding to the charge depths (open-circuit voltages). Patent Literature 2 describes techniques with which a wind power generator and a redox flow battery are combined, output of the wind power generator is averaged and, based on results of the averaging, pump output that causes the electrolytes to circulate is adjusted.

Citation List

Patent Literature

PTL1: Japanese Unexamined Patent Application Publication No. 2006-114359
PTL2: Japanese Unexamined Patent Application Publication No. 2003-317763

Redox flow batteries and their controlling systems and methods are also taught e.g. in WO2008/148148 A1, WO90/03666 A1, or in US8277964 B2.

In the document WO2008/148148 A1, to optimize efficiency and reduce pump power consumption, the electrolyte pump flow rate is in general computed and controlled according to open circuit voltages of measurement cells disposed in the electrolyte passages or according to therefrom calculated change in state of charge of the electrolyte per pass. Furthermore, in an example, an electrolyte pump is switched on when a stack voltage per cell exceeds 1.5V in charging or drops below 1.2V in discharging.

In US8277964 B2, the pump flow rate control is likewise in general based on a calculated state of charge to optimize a round trip or system efficiency. The calculation of the state of charge SOC is based on a measured open circuit voltage Voc in combination with other parameters such as e.g. temperature. Example plot between Voc and SOC, with some specific values of these is shown and may shift. The document further teaches that a controller can e.g. control the pump flow rate to yield a constant voltage. The document further teaches e.g. that to meet load demands, a pump speed has to be higher when the state of charge of the electrolyte is low, whereas during charging, the pump speed has to be higher when the state of charge of the electrolyte is high.

Summary of Invention

Technical Problem

It is preferable that, in the redox flow battery, control be performed so that the electrolytes are neither overcharged nor overdischarged in operation in addition to decreasing the pumping losses.

In the redox flow battery, when overcharge is caused, due to the occurrence of an electrolysis reaction of the electrolytes, gas may be generated and metal ions as an active material may be precipitated in the battery cell. For example, when the SOC becomes 100% and further overcharge is performed, a reaction other than the battery reaction of the active material, specifically, an electrolysis reaction of water in the electrolytes occurs. This generates oxygen ($O_2$) in the positive electrode and hydrogen ($H_2$) in the negative electrode. In the positive electrode, carbon monoxide ($CO$) or carbon dioxide ($CO_2$) may be generated due to a reaction with a carbon electrode. In contrast, when overdischarge is caused, the states of charge of the electrolytes are excessively decreased, and accordingly, output (discharge) from the battery cell becomes impossible. In particular, when overcharge is caused, the battery capacity may be decreased due to a decrease in the amounts of the electrolytes (active materials) and the charge/discharge efficiencies may be decreased due to adherence of the precipitated metal ions to the electrodes or a membrane. Thus, it is preferable that control be performed so that the electrodes are not overcharged.

The present invention has been made in view of the above-described situation. An object of the present invention is to provide a redox flow battery system and a method for operating a redox flow battery that suppress overcharge and overdischarge of electrolytes while decreasing pumping losses.

Solution to Problem

A redox flow battery according to the present invention is defined by the feature combination of independent claim 1.

A method for operating a redox flow battery according to the present invention is defined by the feature combination of independent claim 6.

The redox flow battery system and the method for operating a redox flow battery according to the present invention can suppress the overcharge and the overdischarge of the electrolytes.

Brief Description of Drawings

[Fig. 1] Figure 1 is an explanatory view illustrating a redox flow battery system according to a first embodiment.
[Fig. 2] Figure 2 is an explanatory view illustrating a control flow of pumps of the redox flow battery system according to the first embodiment.
[Fig. 3] Figure 3 is an explanatory view illustrating a redox flow battery system according to a second embodiment.
[Fig. 4] Figure 4 is an explanatory view illustrating a control flow of pumps of the redox flow battery system according to the second embodiment.

Description of Embodiments

[Description of Embodiments]

First, embodiments useful for understanding the present invention, as well as embodiments according to the present invention will be listed and described.

(1) A redox flow battery system according to an embodiment includes a battery cell, an electrolyte tank, circulation piping through which an electrolyte is supplied from the electrolyte tank to the battery cell by circulation, and a pump that causes the electrolyte to circulate through the circulation piping. The redox flow battery system further includes a pump controller that controls a flow rate of the pump and a measurement unit that measures at least two parameters selected from among an inlet-side state of charge of the electrolyte supplied to the battery cell, an outlet-side state of charge of the electrolyte drained from the battery cell, and a charge/discharge current input to/output from the battery cell. The pump controller includes a pump flow-rate computation unit and a pump flow-rate instruction unit. The pump flow-rate computation unit calculates a charge/discharge efficiency of the battery cell from the at least two parameters measured by the measurement unit and, based on the charge/discharge efficiency, determines the flow rate of the pump so that the electrolyte drained from the battery cell is neither overcharged nor overdischarged. The pump flow-rate instruction unit sets in the pump the flow rate determined by the pump flow-rate computation unit.

With the above-described redox flow battery system, the charge/discharge efficiency of the battery cell in operation is recognized and, based on the state of charge of the electrolyte, the flow rate of the pump is set based on the charge/discharge efficiency. Thus, the overcharge and the overdischarge of the electrolyte can be effectively suppressed.

The state of charge (SOC) of the electrolyte of the above-described redox flow battery is determined by the ratio of ion valences in the electrolyte. For example, in the case of a vanadium-based redox flow battery in which V ions are used as active materials for the positive electrode and the negative electrode, a state of charge of a positive-electrode electrolyte is represented by the ratio of $V^{5+}$ to the V ions ($V^{4+}/V^{5+}$) in the positive-electrode electrolyte, and a state of charge of a negative-electrode electrolyte is represented by the ratio of $V^{2+}$ to the V ions ($V^{2+}/V^{3+}$) in the negative-electrode electrolyte. In a cell reaction during charge, $V^{4+}$ is oxidized to $V^{5+}$ in the positive electrode of the battery cell, and $V^{3+}$ is reduced to $V^{2+}$ in the negative electrode of the battery cell. A cell reaction during discharge is reverse to that performed during charge. Furthermore, since the potentials are different depending on the ion valences, the ratios of the ion valences in the electrolytes are correlated to the potentials of the electrolytes. Thus, the states of charge can also be obtained from the potentials of the electrolytes. Standard redox potentials of $V^{5+}$ and $V^{2+}$ are, for example, respectively 1.00 V and -0.26 V. Furthermore, in the redox flow battery, a battery reaction due to changes in ion valences in the positive-electrode electrolyte and the negative-electrode electrolyte is caused by charge/discharge current input to/output from the battery cell. Thus, the states of charge of the positive-electrode electrolyte and the negative-electrode electrolyte are usually the same.

The charge/discharge efficiency of the battery cell refers to the amount of change in the state of charge of each of the electrolytes occurring while the electrolyte passes through the battery cell, that is, from when the electrolyte is supplied to the battery cell to when the electrolyte is drained from the battery cell. The state of charge of the electrolyte is, as has been described, determined by the ratio of the ion valences in the electrolyte. Thus, the change amount of the state of charge of the electrolyte means the rate of change in the ion valence in the electrolyte. Furthermore, a change in the ion valence in the electrolyte of the battery cell is proportional to the product of the charge/discharge current input to/output from the battery cell and a time period (quantity of electricity). That is, the charge/discharge efficiency (the change amount of state of charge of the electrolyte) of the battery cell is proportional to the product (quantity of electricity) of the charge/discharge current input to/output from the battery cell and the time period and determined by an integrated value of the quantity of electricity in the time period in which the electrolyte passes through the battery cell. Here, since the capacity of the battery cell is known in advance, the time period in which the electrolyte passes through the battery cell can be obtained in accordance with the flow rate (flow velocity) of the pump.

The charge/discharge efficiency of the battery cell, which is proportional to the time period in which the electrolyte passes through the battery cell, decreases and the change amount of the state of charge of the electrolyte in the battery cell decreases as the flow rate of the pump is increased (flow velocity is increased). In contrast, the charge/discharge efficiency of the battery cell increases and the change amount of the state of charge of the electrolyte in the battery cell increases as the flow rate of the pump is decreased (flow velocity is decreased). When the charge/discharge efficiency of the battery cell is known, the state of charge of the electrolyte drained from the battery cell can be predicted. Thus, the flow rate of the pump can be determined so that the electrolyte drained from the battery cell is neither overcharged nor overdischarged in accordance with the inlet-side state of charge of the electrolyte. Also, based on the charge/discharge efficiency of the battery cell, the flow rate of the pump can be determined in accordance with the outlet-side state of charge of the electrolyte so that the electrolyte drained from the battery cell is neither overcharged nor overdischarged. Specifically, during charge, in the case of overcharge due to an excessive increase in the state of charge of the electrolyte drained from the battery cell, the overcharge of the electrolyte can be suppressed by increasing the flow rate of the pump so as to decrease the charge/discharge efficiency. Also, during discharge, in the case of overdischarge due to an excessive decrease in the state of charge of the electrolyte drained from the battery cell, the overdischarge of the electrolyte can be suppressed by increasing the flow rate of the pump so as to decrease the charge/discharge efficiency.

Thus, the pump flow-rate computation unit of the pump controller can determine, based on the calculated charge/discharge efficiency, an optimum flow rate of the pump in accordance with the inlet-side state of charge of the electrolyte or the outlet-side of the state of charge of the electrolyte so that the electrolyte drained from the battery cell is neither overcharged nor overdischarged.

(2) In a form of the above-described redox flow battery system, the measurement unit measures the inlet-side state of charge and outlet-side state of charge of the electrolyte. Furthermore, the pump flow-rate computation unit calculates the charge/discharge efficiency of the battery cell from the difference between the inlet-side state of charge and the outlet-side state of charge.

The charge/discharge efficiency of the battery cell can be obtained as the difference between the inlet-side state of charge and the outlet-side state of charge of the electrolyte. Thus, based on the inlet-side state of charge of the electrolyte and the charge/discharge efficiency of the battery cell, the flow rate of the pump can be determined so that the electrolyte drained from the battery cell is neither overcharged nor overdischarged.

(3) In a form of the above-described redox flow battery system, the measurement unit measures the inlet-side state of charge of the electrolyte and the charge/discharge current input to/output from the battery cell. Furthermore, the pump flow-rate computation unit calculates the charge/discharge efficiency of the battery cell in accordance with the charge/discharge current and determines the flow rate of the pump based on the inlet-side state of charge and the charge/discharge efficiency so that the electrolyte drained from the battery cell is neither overcharged nor overdischarged.

As has been described, the charge/discharge efficiency of the battery cell is determined by the integrated value of the quantity of electricity in the battery cell and obtained from the charge/discharge current input to/output from the battery cell. Thus, based on the inlet-side state of charge of the electrolyte and the charge/discharge efficiency of the battery cell, the flow rate of the pump can be determined so that the electrolyte drained from the battery cell is neither overcharged nor overdischarged.

(4) In a form of the above-described redox flow battery system, the measurement unit measures the outlet-side state of charge of the electrolyte and the charge/discharge current input to/output from the battery cell. Furthermore, the pump flow-rate computation unit calculates the charge/discharge efficiency of the battery cell in accordance with the charge/discharge current and determines the flow rate of the pump based on the outlet-side state of charge and the charge/discharge efficiency so that the electrolyte drained from the battery cell is neither overcharged nor overdischarged.

As has been described, the charge/discharge efficiency of the battery cell is determined by the integrated value of the quantity of electricity in the battery cell and obtained from the charge/discharge current input to/output from the battery cell. Thus, based on the outlet-side state of charge of the electrolyte and the charge/discharge efficiency of the battery cell, the flow rate of the pump can be determined so that the electrolyte drained from the battery cell is neither overcharged nor overdischarged.

(5) In a form of the above-described redox flow battery system, the charge/discharge efficiency of the battery cell is calculated using a time average value or a time integrated value of the charge/discharge current.

The charge/discharge efficiency of the battery cell is determined by the integrated value of the quantity of electricity during the passage of the electrolyte through the battery cell, and the time average value or the time integrated value of the charge/discharge current can be used. The time average value of the charge/discharge current is an average value of the charge/discharge current for the time period during the passage of the electrolyte through the battery cell. The time integrated value of the charge/discharge current is a value obtained by integrating instantaneous values of the charge/discharge current during the passage of the electrolyte through the battery cell, that is, integrating the charge/discharge current over the time period.

(6) In a form of the above-described redox flow battery system, the redox flow battery system according to the invention further includes a terminal voltage measurement unit that measures a terminal voltage of the battery cell. In this case, the pump controller further includes a terminal voltage determination unit that determines whether or not the terminal voltage of the battery cell reaches an upper limit or a lower limit of a specified voltage range. When the terminal voltage reaches the upper or lower limit of the specified voltage range, the pump flow-rate computation unit determines that the flow rate of the pump is increased by a specified amount. In contrast, when the terminal voltage does not reach the upper or lower limit of the specified voltage range, the pump flow-rate computation unit calculates the charge/discharge efficiency of the battery cell from the above-described at least two parameters measured by the measurement unit and, based on the charge/discharge efficiency, determines the flow rate of the pump so that the electrolyte drained from the battery cell is neither overcharged nor overdischarged.

As a result of earnest study by the inventors, it was found that, while the redox flow battery is being operated, the terminal voltage of the battery cell may instantaneously fluctuate depending on the operating conditions. As will be described later, when the terminal voltage is out of a specified voltage range in the redox flow battery, the battery may stop even in the case where the state of charge of the electrolyte is within a chargeable/dischargeable range. Thus, there is a possibility of the redox flow battery not being stably operated. The inventors found that the fluctuation of the terminal voltage can be suppressed by increasing the flow rate of the pump, and accordingly, unnecessary stoppage of the battery can be suppressed.

With the above-described configuration, the terminal voltage of the battery cell is recognized, and in the case where it is predicted that the terminal voltage reaches the upper or lower limit of the specified voltage range, the flow rate of the pump is increased. Thus, the fluctuation of the terminal voltage can be suppressed, and accordingly, the occurrence of a situation in which the terminal voltage reaches the upper or lower limit of the specified voltage range can be suppressed. That is, before the terminal voltage reaches the upper or lower limit of the specified voltage range, the occurrence of a situation in which the terminal voltage is out of the specified voltage range can be suppressed by increasing the flow rates of the pump. Specifically, the occurrences of a situation in which the terminal voltage becomes lower than the lower limit of the specified voltage range by an unpredictable decrease in the terminal voltage during discharge and a situation in which the terminal voltage becomes higher than the upper limit of the specified voltage range by an unpredictable increase in the terminal voltage during charge can be suppressed. Thus a problem in that the battery is unnecessarily stopped due to the terminal voltage being out of the specified voltage range even when the state of charge of the electrolyte is within a chargeable/dischargeable range can be avoided. Thus, when the battery cell is in a chargeable/dischargeable state, the unnecessary stoppage of the battery can be suppressed. This allows charge/discharge operation to be continuously performed, and accordingly, stable operation is possible. When increasing the flow rate of the pump, the flow rate of the pump is determined so that, for example, the terminal voltage does not reach the upper or lower limit of the specified voltage range.

The reason why the redox flow battery is stopped by the terminal voltage being out of the specified voltage range is described as follows. That is, a power converter such as an alternating current/direct current converter or a direct current/direct current converter (for example, DC-DC converter) is connected to the battery cell of the redox flow battery so as to control charge and discharge of the battery cell. In general, an operating voltage is set in the power converter (for example, alternating current/direct current converter, direct current/direct current converter, or the like) so as to, in the design, stop the power converter when the terminal voltage of the battery cell becomes lower than a minimum operating voltage. In contrast, when the terminal voltage of the battery cell becomes higher than an upper limit voltage (maximum voltage), there is a possibility of degradation or failure of the battery cell. In order to address this, a maximum operating voltage is set as the upper limit voltage of the battery cell of the power converter so as to, in the design, stop the power converter when the terminal voltage of the battery cell becomes higher than the upper limit voltage.

It was thought that the state of charge (open-circuit voltage) of the electrolyte is correlated to the terminal voltage, and when charge or discharge is performed while the state of charge is within the chargeable/dischargeable range from a discharge end (example, state of charge: 15%) to a full charge (example, state of charge: 90%), the terminal voltage is usually maintained within a range of the operating voltage of the power converter (such as alternating current/direct current converter). However, as the inventors earnestly advanced the study, it was found that the following phenomenon occurs: the terminal voltage is unpredictably increased and decreased depending on the operating conditions such as the flow rates of the pump and the amounts of charge and discharge (input and output). Specifically, the terminal voltage may be decreased to a voltage lower than the minimum operating voltage of the power converter during discharge, and the terminal voltage may be increased to a voltage higher than the maximum operating voltage of the power converter during charge. Thus, with the related-art redox flow battery, the power converter may stop even when the state of charge of the electrolyte is within a chargeable/dischargeable range. Thus, there is a possibility of the power converter not being stably operated. For example, in the case of a vanadium-based redox flow battery, the open-circuit voltage per cell at the discharge end (state of charge: 15%) is about 1.2 V/cell and the open-circuit voltage at full charge (state of charge: 90%) is about 1.5 V/cell. The minimum operating voltage of the power converter calculated as a voltage per cell is set to a voltage lower than the open-circuit voltage at the discharge end (for example, 1.0 V), and the maximum operating voltage of the power converter calculated as a voltage per cell is set to a voltage higher than the open-circuit voltage at full charge (for example, 1.6V).

(7) A method for operating a redox flow battery according to an embodiment supplies an electrolyte from an electrolyte tank to a battery cell by circulation using a pump so as to perform charge and discharge. The method for operating a redox flow battery includes a measuring step, a pump flow-rate computing step, and a pump flow-rate controlling step as follows.

In the measuring step, at least two parameters selected from among an inlet-side state of charge of the electrolyte supplied to the battery cell, an outlet-side state of charge of the electrolyte drained from the battery cell, and a charge/discharge current input to/output from the battery cell are measured.

In the pump flow-rate computing step, a charge/discharge efficiency of the battery cell is calculated from the at least two parameters measured in the measuring step. In addition, based on the charge/discharge efficiency, a flow rate of the pump is determined so that the electrolyte drained from the battery cell is neither overcharged nor overdischarged.

In the pump flow-rate controlling step, the flow rate determined in the pump flow-rate computing step is set in the pump.

With the above-described method for operating a redox flow battery, the charge/discharge efficiency of the battery cell in operation is recognized and, based on the charge/discharge efficiency, the flow rate of the pump is set in accordance with the state of charge of the electrolyte. Thus, the overcharge and the overdischarge of the electrolyte can be effectively suppressed. Specifically, in the pump flow-rate computing step, based on the calculated charge/discharge efficiency of the battery cell, an optimum flow rate of the pump can be determined in accordance with the inlet-side state of charge or the outlet-side state of charge of the electrolyte so that the electrolyte drained from the battery cell is neither overcharged nor overdischarged.

[Details of Embodiments useful for understanding the present invention, as well as of embodiments According to the Present Invention]

Specific examples of a redox flow battery system and a method for operating the redox flow battery according to the embodiments of the present invention, as well as of those according to embodiments useful for understanding the present invention, will be described below with reference to the drawings. Hereafter, the "redox flow battery" may also be referred to as an "RF battery" in some cases. Furthermore, the same reference numerals denote elements of the same names. It should be noted that the present invention is not limited to these examples. The present invention is indicated by the scope of Claims and is intended to embrace all the modifications within the scope of Claims.

[First Embodiment] (Not according to the present invention but illustrating some of its preferred details)

<Overall Configuration of the RF Battery System>

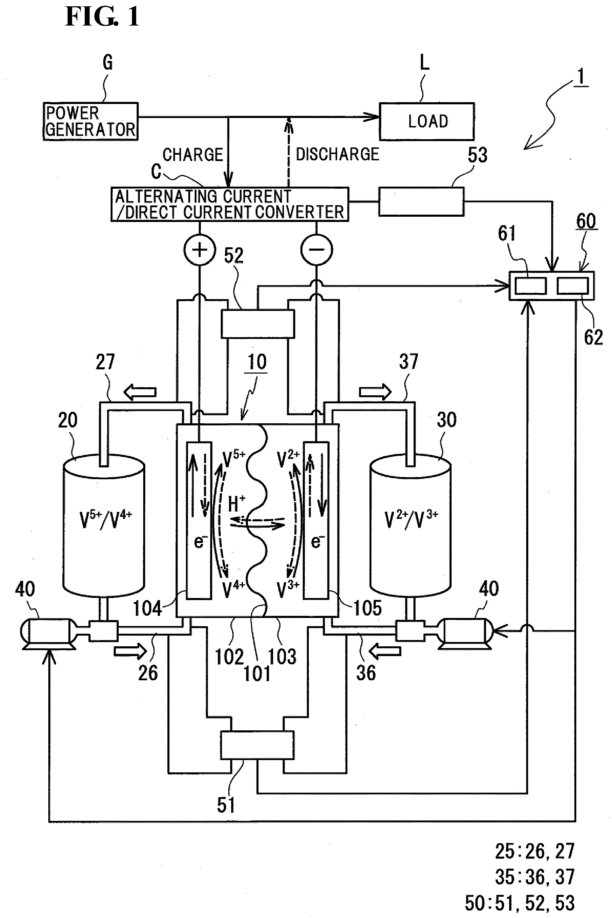

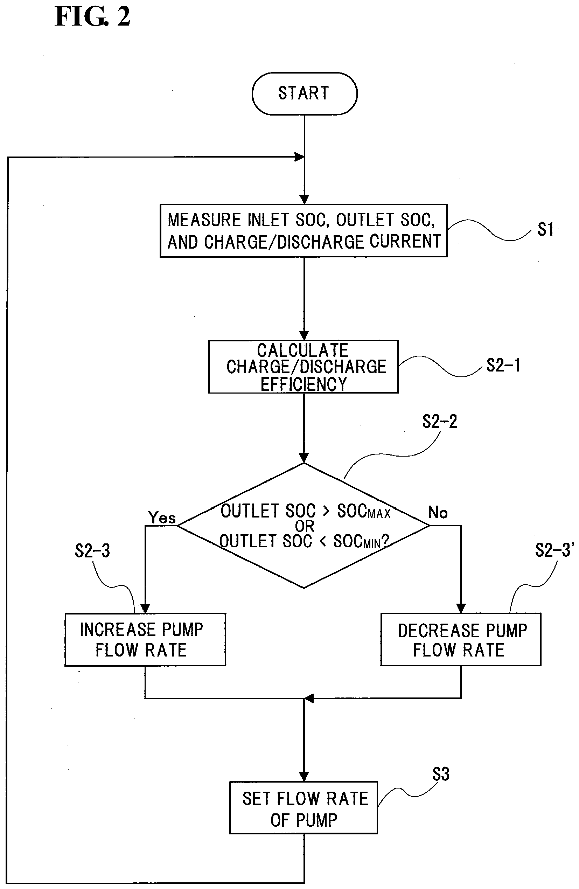

An RF battery system 1 according to a first embodiment is described with reference to Figs. 1 and 2. The RF battery system 1 of Fig. 1 is, as is the case with the related art, connected between a power generator G (such as, for example, a photovoltaic power generator, a wind power generator, or another general power plant) and a load L (power system or customer) through an alternating current/direct current converter C so as to charge the power supplied from the power generator G and discharge the accumulated power to supply the power to the load L. Furthermore, the RF battery system 1 includes a battery cell 10 and a circulation mechanism (tanks, pipes, and pumps) that supplies electrolytes to the battery cell 10.

(The Battery Cell and the Circulation Mechanism)

The RF battery system 1 includes the battery cell 10. The battery cell 10 is partitioned into a positive-electrode cell 102 and a negative-electrode cell 103 by a membrane 101 formed of an ion-permeable membrane. A positive electrode 104 is disposed in the positive-electrode cell 102 and a negative electrode 105 is disposed in the negative-electrode cell 103. Furthermore, the RF battery system 1 includes a positive-electrode electrolyte tank 20, a negative-electrode electrolyte tank 30, positive-electrode-side circulation piping 25, negative-electrode-side circulation piping 35, and pumps 40, 40. The positive-electrode electrolyte tank 20 and the negative-electrode electrolyte tank 30 respectively store a positive-electrode electrolyte and a negative-electrode electrolyte. The positive-electrode electrolyte and the negative-electrode electrolyte are supplied from the electrolyte tanks 20 and 30 to the battery cell 10 (positive-electrode cell 102 and negative-electrode cell 103) through the positive-electrode-side circulation piping 25 and the negative-electrode-side circulation piping 35 by circulation, respectively. The pumps 40, 40 cause the positive-electrode electrolyte and the negative-electrode electrolyte to circulate through the circulation piping 25 and 35, respectively. The positive-electrode-side circulation piping 25 includes a feed pipe 26 through which the positive-electrode electrolyte is fed from the positive-electrode electrolyte tank 20 to the positive-electrode cell 102 and a return pipe 27 through which the positive-electrode electrolyte is returned from the positive-electrode cell 102 to the positive-electrode electrolyte tank 20. The negative-electrode-side circulation piping 35 includes a feed pipe 36 through which the negative-electrode electrolyte is fed from the negative-electrode electrolyte tank 30 to the negative-electrode cell 103 and a return pipe 37 through which the negative-electrode electrolyte is returned from the negative-electrode cell 103 to the negative-electrode electrolyte tank 30. The pumps 40, 40 are variable pumps the numbers of revolutions of which can be controlled. The flow rates can be adjusted in accordance with the numbers of revolutions. With the pumps 40, 40 provided for the circulation piping 25 and 35, the positive-electrode electrolyte and the negative-electrode electrolyte are supplied from the electrolyte tanks 20 and 30 to the battery cell 10 by circulation, thereby causing a battery reaction (charge and discharge reaction) due to changes in ion valences in both the electrolytes in the battery cell 10. In the RF battery system 1 of Fig. 1, a vanadium-based RF battery using V ions as an active material for the positive electrode and the negative electrode is used as an example. Solid-line arrows and and broken-line arrows in the battery cell 10 of Fig. 1 respectively indicate a charge reaction and a discharge reaction.

The battery cell 10 is used in the form of a so-called cell stack (not illustrated) in which a plurality of single cells that each include the positive electrode 104 (positive-electrode cell 102), a negative electrode 105 (negative-electrode cell 103), and membrane 101 as its elements are stacked. The cell stack utilizes cell frames that include bipolar plates (not illustrated) and frame bodies (not illustrated). The positive electrode 104 and the negative electrode 105 are respectively disposed on one and the other surfaces of each bipolar plate. The frame bodies have liquid supply holes for supplying the positive-electrode electrolyte and the negative- electrode electrolyte and liquid drainage holes for draining the electrolytes. The frame bodies are formed at outer peripheries of the bipolar plates. With the plurality of cell frames stacked, the liquid supply holes and the liquid drainage holes form fluid paths which are connected to the circulation piping 25 and 35. In the cell stack, a cell frame, the positive electrode 104, the membrane 101, the negative electrode 105, a cell frame ... are stacked in this order.

The RF battery system 1 is charged and discharged by inputting and outputting a charge/discharge current to and from the positive electrode 104 and the negative electrode 105 of the battery cell 10 through the alternating current/direct current converter C. Specifically, during charge, the charge reaction is caused in the battery cell 10 by inputting the charge current to the positive electrode 104 and the negative electrode 105 of the battery cell 10 through the alternating current/direct current converter C. In contrast, during discharge, the discharge reaction is caused in the battery cell 10, thereby outputting the discharge current from the positive electrode 104 and the negative electrode 105 of the battery cell 10 through the alternating current/direct current converter C.

(The Measurement Unit)

The RF battery system 1 includes a measurement unit 50 that measures at least two parameters selected from among inlet-side states of charge of the electrolytes supplied to the battery cell 10 (simply referred to as "inlet SOCs" hereafter), outlet-side states of charge of the electrolytes drained from the battery cell 10 (simply referred to as "outlet SOCs" hereafter), and the charge/discharge current input to/output from the battery cell 10. The measurement unit 50 of the RF battery system 1 of Fig. 1 includes an inlet SOC measurement unit 51 that measures the inlet SOCs, an outlet SOC measurement unit 52 that measures the outlet SOCs, and a current measurement unit 53 that measures the charge/discharge current. Despite this, it is sufficient that the measurement unit 50 includes at least two of these three measurement units 51, 52, and 53.

The state of charge (SOC) of an electrolyte is determined by the ratio of ion valences in the electrolyte. In the case of the vanadium-based RF battery, the SOC of the positive-electrode electrolyte is represented by the ratio of $V^{5+}$ to the V ions ($V^{4+}/V^{5+}$) in the positive-electrode electrolyte, and the SOC of the negative-electrode electrolyte is represented by the ratio of $V^{2+}$ to the V ions ($V^{2+}/V^{3+}$) in the negative-electrode electrolyte. These ratios are represented by the following expressions:

$$\text{Positive electrode: } V^{5+}/(V^{4+} + V^{5+})$$

$$\text{Negative electrode: } V^{2+}/(V^{2+} + V^{3+}).$$

Furthermore, since the potentials are different depending on ion valences, the ratios of the ion valences in the electrolytes are correlated to the potentials of the electrolytes. Thus, the SOCs can also be obtained from the potentials of the electrolytes. For example, standard redox potentials of $V^{5+}$ and $V^{2+}$ are respectively 1.00 V and -0.26 V.

Typically, in the RF battery, the battery reaction is changes in ion valences in the electrolytes, and the states of charge of the positive-electrode electrolyte and the negative-electrode electrolyte are usually the same. Thus, the SOCs may be obtained by measuring the ratio of ion valences of the electrolyte in the positive-electrode electrolyte or the negative-electrode electrolyte or by measuring the potential of the electrolyte. Furthermore, the SOC may be obtained by measuring the potential difference (open-circuit voltage) between the positive-electrode electrolyte and the negative-electrode electrolyte. Furthermore, with some metal ions used as the active material, the color, the transparency, and the absorbance of the electrolyte change depending on the ratio of the ion valences in the electrolyte. Thus, the SOC may also be obtained by using the color, the transparency, and the absorbance of the electrolyte as indices. For example, a voltmeter may be used for measuring the potentials of the electrolytes, a monitor cell may be used for measuring the potential difference (open-circuit voltage), and a spectrophotometer may be used for measuring the color, the transparency, and the absorbance of the electrolyte. The monitor cell has a similar configuration to that of the battery cell 10 but is not connected to the alternating current/direct current converter C. Thus, the monitor cell is a battery cell that does not contribute to charge and discharge. As is the case with the battery cell 10, the SOCs can be obtained even when the RF battery system 1 is in operation by supplying the positive-electrode electrolyte and the negative-electrode electrolyte to the monitor cell and measuring the open-circuit voltage of the monitor cell.

(The Inlet SOC Measurement Unit)

The inlet SOC measurement unit 51 measures the inlet SOCs, and, according to the present example, utilizes a monitor cell. According to the present example, branch portions are provided for the feed pipes 26 and 36 of the positive electrode and the negative electrode so as to supply the positive-electrode electrolyte and the negative-electrode electrolyte to be supplied to the battery cell 10 to the inlet SOC measurement unit 51, thereby measuring the open-circuit voltage. The measurement of the open-circuit voltage measured by the inlet SOC measurement unit 51 is transmitted to a pump controller 60 through a signal line. In addition, the inlet SOC measurement unit 51 may measure the SOCs of the electrolytes in the electrolyte tanks 20 and 30.

(The Outlet SOC Measurement Unit)

The outlet SOC measurement unit 52 measures the outlet SOCs, and according to the present example, utilizes a monitor cell. According to the present example, branch portions are provided for the return pipes 27 and 37 of the positive electrode and the negative electrode so as to supply the positive-electrode electrolyte and the negative-electrode electrolyte having been drained from the battery cell 10 to the outlet SOC measurement unit 52, thereby measuring the open-circuit voltage. The measurement of the open-circuit voltage measured by the outlet SOC measurement unit 52 is transmitted to the pump controller 60 through a signal line.

(The Current Measurement Unit)

The current measurement unit 53 measures the charge/discharge current input to/output from the battery cell 10, and, according to the present example, utilizes an ammeter and attached to the alternating current/direct current converter C. The measurement of the charge/discharge current measured by the current measurement unit 53 is transmitted to the pump controller 60 through a signal line.

(The Pump Controller)

The pump controller 60 controls the flow rates of the pumps 40, 40 by controlling the numbers of the revolutions of the pumps. The pump controller 60 includes a pump flow-rate computation unit 61 and a pump flow-rate instruction unit 62. The pump flow-rate computation unit 61 calculates charge/discharge efficiencies of the battery cell 10 from at least two parameters out of parameters (inlet SOC, outlet SOC, and charge/discharge current) measured by the measurement unit 50. In addition, the pump flow-rate computation unit 61 determines, based on the charge/discharge efficiencies, the flow rates of the pumps so that the electrolytes drained from the battery cell 10 are neither overcharged nor overdischarged. The pump flow-rate instruction unit 62 sets the flow rates determined by the pump flow-rate computation unit 61 in the pumps 40, 40.

(The Pump Flow-rate Computation Unit)

The charge/discharge efficiencies of the battery cell 10 can be obtained by the pump flow-rate computation unit 61 as follows. That is, in the case where the measurement unit 50 includes the inlet SOC measurement unit 51 and the outlet SOC measurement unit 52 and measures the inlet SOC and the outlet SOC, the charge/discharge efficiencies can be calculated as the differences between the inlet SOC and the outlet SOC. Furthermore, in the case where the measurement unit 50 includes the current measurement unit 53 and measures the charge/discharge current, the charge/discharge efficiencies can be obtained by calculating integrated values of the quantity of electricity (charge/discharge current × time period) during time periods in which the electrolytes pass through the battery cell 10. The time periods in which the electrolytes pass through the battery cell 10 can be obtained from the flow rates of the pumps 40, 40. Thus, when the charge/discharge current is known, the charge/discharge efficiencies can be obtained. For the purpose of load leveling, in many cases, the charge/discharge current is a fixed value for a certain time period. Thus, the charge/discharge efficiencies can be obtained as the products of the charge/discharge current and the time periods in which the electrolytes pass through the battery cell 10. Here, in order to calculate the charge/discharge efficiencies, the charge/discharge current may be a time average value or a time integrated value. The time average value of the charge/discharge current can be obtained by, for example, averaging the charge/discharge current during the passage of the electrolytes through the battery cell 10. The averaging of the charge/discharge current is realized with, for example, a low-pass filter. The time integrated value of the charge/discharge current is a value obtained by integrating instantaneous values of the charge/discharge current during the passage of the electrolytes through the battery cell 10, that is, integrating the charge/discharge current over the time periods. For the purpose of output leveling, in many cases the charge/discharge current fluctuates in a short time period. Thus, the calculation is easier when the time average value of the charge/discharge current is used.

Furthermore, the pump flow-rate computation unit 61 determines the flow rates of the pumps based on the calculated charge/discharge efficiencies so that the electrolytes drained from the battery cell 10 are neither overcharged nor overdischarged. As described above, the charge/discharge efficiencies of the battery cell 10, which are proportional to the time periods in which the electrolytes pass through the battery cell 10, decrease and the change amounts of the states of charge of the electrolytes in the battery cell 10 decrease as the flow rates of the pumps 40, 40 are increased (flow velocities are increased). In contrast, the charge/discharge efficiencies increase and the change amounts of the states of charge of the electrolytes in the battery cell 10 increase as the flow rates of the pumps 40, 40 are decreased (flow velocities are decreased). When the charge/discharge efficiencies of the battery cell 10 are known, the outlet SOC can be predicted in accordance with the inlet SOC. Thus, the flow rates of the pumps can be determined so that the outlet SOC are neither overcharged nor overdischarged. Alternatively, based on the charge/discharge efficiencies, the flow rates of the pumps can be determined in accordance with the outlet SOC so that neither overcharge nor overdischarge is caused. Specifically, in the case of overcharge, during charge, due to excessive increases in the states of charge of the electrolytes drained from the battery cell 10 or in the case of overdischarge, during discharge, due to excessive decreases in the states of charge of the electrolyte drained from the battery cell 10, the flow rates of the pumps 40, 40 are increased so as to decrease the charge/discharge efficiencies.

Here, the term "overcharge" means a state in which the SOCs are 100% or close to 100%, for example, a state in which the SOCs become 100% and a reaction other than a battery reaction of the active material (for example, an electrolysis reaction of water contained in the electrolytes) occurs. The term "overdischarge" means a state in which the SOCs are 0% or close to 0%, for example, a state in which the SOCs become 0% and a reaction other than a battery reaction of the active material occurs or the potential becomes in such a state that an electromotive force (open-circuit voltage) of the battery suddenly decreases. In order to set the outlet-side SOC within a range from more than 0 to less than 100%, the RF battery system 1 is preferably operated with the inlet-side SOC in a range from 10 to 90%, and more preferably, in a range from 20 to 80%. It is also preferable that the flow rates of the pumps be controlled so that the charge/discharge efficiencies of the battery cell 10 are in a range from, for example, 10 to 20%.

(The Pump Flow-rate Instruction Unit)

The pump flow-rate instruction unit 62 issues through the signal line an instruction for setting the flow rates determined by the pump flow-rate computation unit 61 in the pumps 40, 40.

The flow rates of the pumps 40, 40 are each controlled by setting, in accordance with the determined flow rate of the pump, control parameters such as the number of revolutions of the pump, the amount of drainage, and a drain pressure. For example, the flow rate of the pump may be controlled as follows: the control parameters such as the number of revolutions of the pump, the amount of drainage, and the drain pressure in accordance with the flow rate of the pump are predetermined; the control parameters corresponding to the determined flow rate are obtained from relations or relationship tables representing the relationships between the flow rate and the control parameters; and the obtained control parameters are set.

<A Method for Operating the RF Battery System>

A method for operating the RF battery system 1 that includes the above-described measurement unit 50 and the pump controller 60 is described. The method for operating the RF battery system 1 is a method for operating in which the flow rates of the pumps 40, 40 are controlled based on the charge/discharge efficiencies of the battery cell 10. The method for operating the RF battery system 1 includes a measuring step, a pump flow-rate computing step, and a pump flow-rate controlling step which are described below. Specific processes of each of the steps are described below with reference to a flowchart of Fig. 2.

(The Measuring Step)

In the measuring step, at least two parameters selected from among the inlet-side state of charge of the electrolytes supplied to the battery cell 10, the outlet-side states of charge of the electrolytes drained from the battery cell 10, and the charge/discharge current input to/output from the battery cell 10 are measured. Specifically, at least two parameters selected from among the inlet SOC, the outlet SOC, and the charge/discharge current are measured by the measurement unit 50 (step S1). It is sufficient that any two out of these three parameters be measured in the measuring step.

(The Pump Flow-rate Computing Step)

In the pump flow-rate computing step, the charge/discharge efficiencies of the battery cell 10 are calculated from at least two parameters measured in the measuring step. In addition, based on the charge/discharge efficiencies, the flow rates of the pumps are determined so that the electrolytes drained from the battery cell 10 are neither overcharged nor overdischarged. In the pump flow-rate computing step, the charge/discharge efficiencies of the battery cell 10 are initially calculated (step S2-1). As has been described, the charge/discharge efficiencies can be obtained by calculation as the differences between the inlet SOC and the outlet SOC or obtained by calculating integrated values of the quantity of electricity (charge/discharge current $\times$ time period) during time periods in which the electrolytes pass through the battery cell 10.

Next, the flow rates of the pumps are determined based on the charge/discharge efficiencies so that the electrolytes drained from the battery cell 10 are neither overcharged nor overdischarged. For example, when the inlet SOC is known, the outlet SOC can be predicted and the flow rates of the pumps can be determined based on the charge/discharge efficiencies so that the predicted outlet SOC is neither overcharged nor overdischarged. Alternatively, based on the charge/discharge efficiencies, the flow rates of the pumps can be determined in accordance with the outlet SOC so that neither overcharge nor overdischarge is caused. Specifically, whether or not the outlet SOC (measurements or predicted values) is more than overcharged state ($SOC_{MAX}$) or less than overdischarged state ($SOC_{MIN}$) is determined (step S2-2). When the outlet SOC is more than the $SOC_{MAX}$ or less than the $SOC_{MIN}$, the flow rates of the pumps are increased so as to obtain such charge/discharge efficiencies that neither overcharge nor overdischarge is caused (step S2-3).

Furthermore, according to the present example, when the outlet SOC is within a range between the $SOC_{MIN}$ and the $SOC_{MAX}$, the flow rates of the pumps are decreased so that the charge/discharge efficiencies are within such a range that neither overcharge nor overdischarge is caused (step S2-3'). This can effectively decrease pumping losses. In this case, it may be selected that the flow rates of the pumps are not changed.

(The Pump Flow-rate Controlling Step)

The flow rates determined by the pump flow-rate computing step are set in the pumps 40 in the pump flow-rate controlling step (S3).

With the above-described RF battery system 1 according to the first embodiment, the charge/discharge efficiencies of the battery cell 10 in operation are recognized in real time, and, based on the charge/discharge efficiencies, the flow rates of the pumps 40, 40 are set in accordance with the states of charge of the electrolytes. Thus, overcharge and overdischarge of the electrolytes can be effectively suppressed.

According to the first embodiment, the charge/discharge current input to/output from the battery cell 10 is measured by the current measurement unit 53. In the RF battery system 1, in the case where an operating schedule (charge, discharge, standby, stop) is preset, the charge/discharge current input to/output from the battery cell 10 have been determined based on the operating schedule. In this case, the pump controller 60 may obtain the charge/discharge current in accordance with the operating schedule from operating schedule information and calculate the charge/discharge efficiencies of the battery cell 10 using the charge/discharge current.

In the RF battery system 1 according to the above-described first embodiment, a vanadium-based RF battery in which V ions are used as the active materials for the positive and negative electrodes is described as an example. However, the above-described techniques can be applied not only to the vanadium-based RF battery but also to an iron-chromium based RF battery and a titanium-manganese based RF battery using Mn ions as the positive-electrode active material and Ti ions as the negative-electrode active material.

[Second Embodiment]

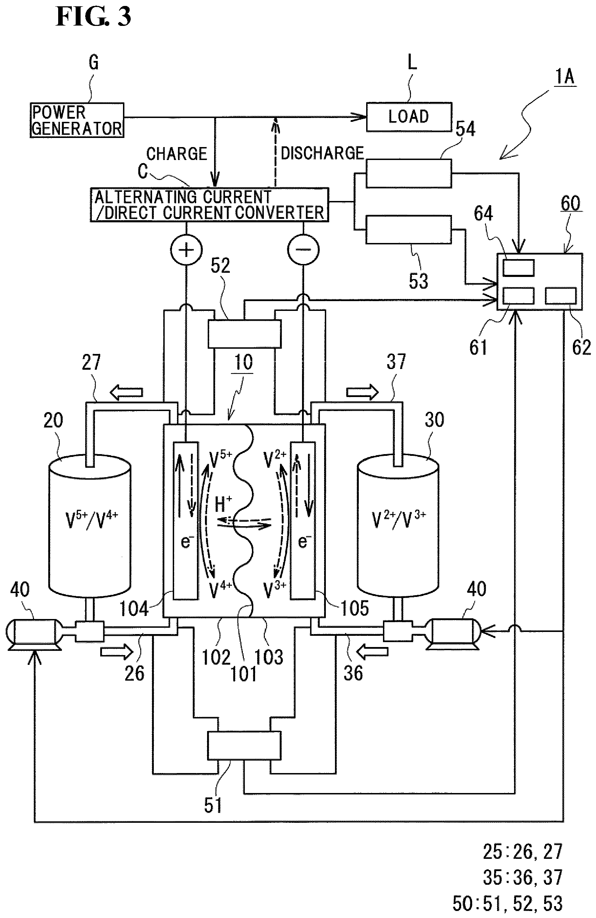

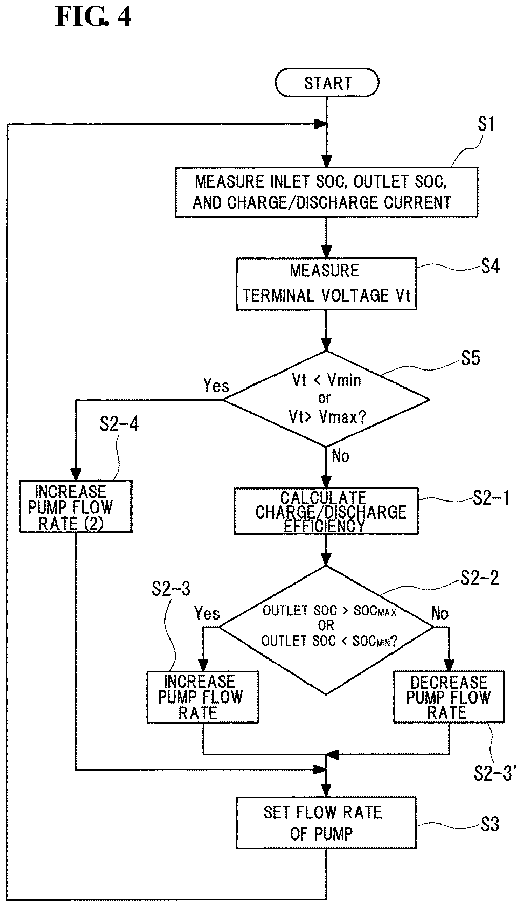

An RF battery system according to a second embodiment is described with reference to Figs. 3 and 4. Compared to the RF battery system 1 of Fig. 1 according to the first embodiment, an RF battery system 1A of Fig. 3 according to the second embodiment further includes a terminal voltage measurement unit 54, and the pump controller 60 further includes a terminal voltage determination unit 64. Hereafter, the RF battery system 1A according to the second embodiment is described by mainly describing the difference between the first embodiment and the RF battery system 1A according to the second embodiment while description of similar structures is omitted.

(The Terminal Voltage Measurement Unit)

The terminal voltage measurement unit 54 measures a terminal voltage (Vt) of the battery cell 10. According to the present example, the terminal voltage measurement unit 54 utilizes a voltmeter and is provided in the alternating current/direct current converter C (power converter). The measurements of the terminal voltage measured by the terminal voltage measurement unit 54 are transmitted to the pump controller 60 through a signal line.

(The Terminal Voltage Determination Unit)

The terminal voltage determination unit 64 determines whether or not the terminal voltage (Vt) of the battery cell 10 measured by the terminal voltage measurement unit 54 reaches an upper limit or a lower limit of a specified voltage range. According to the present example, the specified voltage range of the terminal voltage (Vt) is set based on an operating voltage of the alternating current/direct current converter C. Specifically, the lower limit is set to a minimum operating voltage of the alternating current/direct current converter C and the upper limit is set to a maximum operating voltage of the alternating current/direct current converter C (upper limit voltage of the battery cell 10). Also according to the present example, the determination on whether or not the terminal voltage (Vt) reaches the lower limit or the upper limit of the specified voltage range is performed as follows: it is determined that the terminal voltage (Vt) reaches the lower limit or the upper limit when the terminal voltage (Vt) has reached a value close to the lower limit (minimum operating voltage) or the upper limit (maximum operating voltage) of the specified range. For example, when the terminal voltage (Vt) has reached a voltage in a specified range from the lower limit or the upper limit (for example, a range of 5%, furthermore, a range of 10%, and so forth from the lower or upper limit) of the operating voltage of the alternating current/direct current converter C, it is determined that terminal voltage (Vt) reaches the lower limit or the upper limit.

(The Pump Flow-rate Computation Unit)

The pump flow-rate computation unit 61 determines the flow rates of the pumps also in consideration of a result of the determination performed by the terminal voltage determination unit 64 on whether or not the terminal voltage (Vt) reaches the upper limit or the lower limit of a specified voltage range. Specifically, when the terminal voltage determination unit 64 determines that the terminal voltage (Vt) reaches the upper or lower limit of the specified voltage range, it is determined that the flow rates of the pumps are increased by specified amounts. That is, when it is predicted that the terminal voltage (Vt) reaches the upper or lower limit of the specified voltage range, the flow rates of the pumps 40, 40 are increased. In order to increase the flow rates of the pumps, the flow rates of the pumps are determined so that the terminal voltage does not reach the upper or lower limits of the specified voltage range. The flow rates are increased, for example, by 10%, or further, by 20% of the present flow rates of the pumps. Alternatively, the increases in the flow rates of the pumps are determined so that the flow rates of the pumps become rated flow rates (for example, maximum flow rates). The increases in the flow rates are preferably set by obtaining, through an experiment or the like performed in advance, minimum flow rates required for preventing the terminal voltage (Vt) from reaching the upper or lower limit of the specified voltage range.

In contrast, when the terminal voltage determination unit 64 determines that the terminal voltage (Vt) does not reach the upper or lower limit of the specified voltage range, as has been described in the first embodiment, the charge/discharge efficiencies of the battery cell 10 are calculated from at least two parameters out of the parameters (inlet SOC, outlet SOC, and charge/discharge current) measured by the measurement unit 50 and, based on the charge/discharge efficiencies, the flow rates of the pumps are determined so that the electrolytes drained from the battery cell 10 are neither overcharged nor overdischarged.

A method for operating the above-described RF battery system 1A according to the second embodiment is described with reference to Fig. 4. Hereafter, the method for operating the RF battery system 1A is described by mainly describing the difference between the method for operating the RF battery system 1A and the method for operating the RF battery system 1 according to the first embodiment described with reference to Fig. 2.

Compared to the method for operating of Fig. 2 according to the first embodiment, in the method for operating the RF battery system 1A of Fig. 4 according to the second embodiment, a terminal voltage measuring step (step S4) and a terminal voltage determining step (step S5) are added. According to the present example, the method for operating includes the terminal voltage measuring step and the terminal voltage determining step between the measuring step (step S1) and the pump flow-rate computing step (step S2-1).

(The Terminal Voltage Measuring Step)

A terminal voltage (Vt) of the battery cell 10 is measured in the terminal voltage measuring step (step S4). According to the present example, as described above, the terminal voltage (Vt) is measured by the terminal voltage measurement unit 54.

(The Terminal Voltage Determining Step)

In the terminal voltage determining step, whether or not the terminal voltage (Vt) of the battery cell 10 measured in the terminal voltage measuring step S4 reaches the lower limit or the upper limit of the specified voltage range is determined (step S5). According to the present example, as described above, the terminal voltage determination unit 64 of the pump controller 60 determines whether or not the terminal voltage (Vt) has reached a value close to the minimum operating voltage or the maximum operating voltage of the alternating current/direct current converter C. Specifically, it is determined that whether or not the terminal voltage (Vt) reaches the lower or upper limit of the specified voltage range in accordance with whether or not the terminal voltage (Vt) has reached a value within the specified range from the minimum operating voltage or the maximum operating voltage (in Fig. 4, a value within the specified range from the minimum operating voltage as the lower limit is represented by "Vmin" and a value within the specified range from the maximum operating voltage as the upper limit is represented by "Vmax"). When the terminal voltage (Vt) has reached a value close to the minimum operating voltage or the maximum operating voltage, that is, the terminal voltage (Vt) is within the specified range from the minimum operating voltage or the maximum operating voltage, it is determined that the terminal voltage (Vt) reaches the lower limit or the upper limit.

(The Pump Flow-rate Computing Step)

The flow rates of the pumps are determined in the pump flow-rate computing step also in consideration of the result of the determination performed in the terminal voltage determining step S5 on whether or not the terminal voltage (Vt) reaches the lower limit or the upper limit of the specified voltage range. Specifically, when it is determined in the terminal voltage determining step S5 that the terminal voltage (Vt) reaches the upper or lower limit of the specified voltage range, it is determined that the flow rates of the pumps are increased by specified amounts (step S2-4). In contrast, when it is determined that the terminal voltage (Vt) does not reach the upper or lower limit of the specified voltage range in the terminal voltage determining step S5, as has been described in the first embodiment, the charge/discharge efficiencies of the battery cell 10 are calculated from at least two parameters out of the parameters measured in the measuring step S1 and, based on the charge/discharge efficiencies, the flow rates of the pumps are determined so that the electrolytes drained from the battery cell 10 are neither overcharged nor overdischarged. That is, from the calculation of the charge/discharge efficiencies of the battery cell 10 (step S2-1), the increasing of the flow rates of the pumps (step S2-3) or the decreasing of flow rates of the pumps (step S2-3') is performed so as to obtain the charge/discharge efficiencies with which the overcharge or the overdischarge does not occur.

With the RF battery system 1A according to the second embodiment having been described, as is the case with the first embodiment, the overcharge and the overdischarge of the electrolytes can be effectively suppressed. Furthermore, the terminal voltage of the battery cell 10 is constantly recognized during the operation, and even when it is predicted that the terminal voltage (Vt) reaches the upper or lower limit of the specified voltage range, fluctuation of the terminal voltage (Vt) can be suppressed by increasing the flow rates of the pumps 40, 40. As a result, a situation in which the terminal voltage (Vt) is out of the specified voltage range even when the SOCs are in a chargeable/dischargeable range can be suppressed. Thus, safety operation is possible.

Industrial Applicability

The redox flow battery system according to the present invention can be utilized for large-capacity secondary batteries targeted for leveling of output fluctuation, storage of surplus power, load leveling, and so forth in power generation utilizing natural energy. The method for operating the redox flow battery according to the present invention can be utilized for operation of redox flow battery systems that include a pump for circulating an electrolyte in a battery cell.

Reference Signs List

1, 1A   redox flow battery system
10      battery cell
101     membrane
102     positive-electrode cell
103     negative-electrode cell
104     positive electrode
105     negative electrode
20      positive-electrode electrolyte tank
25      positive-electrode-side circulation piping
26      feed pipe
27      return pipe
30      negative-electrode electrolyte tank
35      negative-electrode-side circulation piping
36      feed pipe
37      return pipe
40      pump
50      measurement unit
51      inlet SOC measurement unit
52      outlet SOC measurement unit
53      current measurement unit
54      terminal voltage measurement unit
60      pump controller
61      pump flow-rate computation unit
62      pump flow-rate instruction unit
64      terminal voltage determination unit
C       alternating current/direct current converter
G       power generator
L       load

**Claims**

1. A redox flow battery system comprising:

a battery cell;
an electrolyte tank;
circulation piping through which an electrolyte is supplied from the electrolyte tank to the battery cell by circulation; and
a pump (40) that causes the electrolyte to circulate through the circulation piping,
wherein the redox flow battery system further includes
a pump controller (60) that is configured to control a flow rate of the pump,
a terminal voltage measurement unit (54) that is configured to measure a terminal voltage of the battery cell, and
a measurement unit (50) that is configured to measure at least two parameters selected from among an inlet-side state of charge of the electrolyte supplied to the battery cell, an outlet-side state of charge of the electrolyte drained from the battery cell, and a charge/discharge current input to/output from the battery cell,
wherein the pump controller includes

a pump flow-rate computation unit (61) that is configured to calculate a charge/discharge efficiency of the battery cell from the at least two parameters measured by the measurement unit and, based on the charge/discharge efficiency, to determine the flow rate of the pump so that the electrolyte drained from the battery cell is neither overcharged nor overdischarged, the charge/discharge efficiency of the battery cell representing an amount of change in a state of charge of the electrolyte occurring while the electrolyte passes through the battery cell,
a pump flow-rate instruction unit (62) that is configured to set in the pump the flow rate determined by the pump flow-rate computation unit, and

a terminal voltage determination unit (64) that is configured to determine whether or not the terminal voltage of the battery cell reaches an upper limit or a lower limit of a specified voltage range,
wherein the pump controller is configured such that when the terminal voltage reaches the upper or lower limit of the specified voltage range, the pump flow-rate computation unit determines that the flow rate of the pump is increased by a specified amount, and
when the terminal voltage does not reach the upper or lower limit of the specified voltage range, the pump flow-rate computation unit calculates the charge/discharge efficiency of the battery cell from the at least two parameters measured by the measurement unit and, based on the charge/discharge efficiency, determines the flow rate of the pump so that the electrolyte drained from the battery cell is neither overcharged nor overdischarged.

2. The redox flow battery system according to Claim 1, wherein the measurement unit measures the inlet-side state of charge of the electrolyte and the outlet-side state of charge of the electrolyte, and
the pump flow-rate computation unit calculates the charge/discharge efficiency of the battery cell from the difference between the inlet-side state of charge and the outlet-side state of charge.

3. The redox flow battery system according to Claim 1, wherein the measurement unit measures the inlet-side state of charge of the electrolyte and the charge/discharge current input to/output from the battery cell, and

wherein the pump flow-rate computation unit calculates the charge/discharge efficiency of the battery cell in accordance with the charge/discharge current and determines the flow rate of the pump based on the inlet-side state of charge and the charge/discharge efficiency so that the electrolyte drained from the battery cell is neither overcharged nor overdischarged.

4. The redox flow battery system according to Claim 1, wherein the measurement unit measures the outlet-side state of charge of the electrolyte and the charge/discharge current input to/output from the battery cell, and

wherein the pump flow-rate computation unit calculates the charge/discharge efficiency of the battery cell in accordance with the charge/discharge current and determines the flow rate of the pump based on the outlet-side state of charge and the charge/discharge efficiency so that the electrolyte drained from the battery cell is neither overcharged nor overdischarged.

5. The redox flow battery system according to Claim 3 or 4, wherein the charge/discharge efficiency of the battery cell is calculated using a time average value or a time integrated value of the charge/discharge current.

6. A method for operating a redox flow battery that supplies an electrolyte from an electrolyte tank to a battery cell by circulation using a pump so as to perform charge and discharge, the method comprising:

a measuring step in which at least two parameters selected from among an inlet-side state of charge of the electrolyte supplied to the battery cell, an outlet-side state of charge of the electrolyte drained from the battery cell, and a charge/discharge current input to/output from the battery cell are measured,

a terminal voltage measuring step of measuring the terminal voltage of the battery cell,

a terminal voltage determination step of determining whether or not the terminal voltages of the battery cell measured in the terminal voltage measuring step reach the lower limit or the upper limit of a specified voltage range,

a pump flow-rate computing step in which, when it is determined in the terminal voltage determining step that the terminal voltage reaches the upper or lower limit of the specified voltage range, it is determined that the flow rate of the pumps are increased by a specified amount, and when it is determined that the terminal voltage does not reach the upper or lower limit of the specified voltage range a charge/discharge efficiency of the battery cell is calculated from the at least two parameters measured in the measuring step and, based on the charge/discharge efficiency, a flow rate of the pump is determined so that the electrolyte drained from the battery cell is neither overcharged nor overdischarged, the charge/discharge efficiency of the battery cell representing an amount of change in a state of charge of the electrolyte occurring while the electrolyte passes through the battery cell, and a pump flow-rate controlling step in which the flow rate determined in the pump flow-rate computing step is set in the pump.

**Patentansprüche**

1. Redox-Flussbatteriesystem, umfassend:

eine Batteriezelle;
einen Elektrolytbehälter;
Umlaufleitungen, durch welche durch Umwälzen einen Elektrolyten aus dem Elektrolytbehälter zu der Batteriezelle geleitet wird; und
eine Pumpe (40), die den Elektrolyten zum Zirkulieren durch die Umlaufleitungen veranlasst,
wobei das Redox-Flussbatteriesystem des Weiteren beinhaltet:

eine Pumpensteuerung, die dazu ausgelegt ist, eine Durchflussgeschwindigkeit der Pumpe zu steuern,
eine Klemmenspannungsmesseinheit (54), die dazu ausgelegt ist, eine Klemmenspannung der Batteriezelle zu messen, und
eine Messeinheit (50), die dazu ausgelegt ist, mindestens zwei Parameter zu messen, die aus einem einlassseitigen Ladezustand des Elektrolyten, der zu der Batteriezelle geleitet wird, einem auslassseitigen Ladezustand des Elektrolyten, der aus der Batteriezelle abgelassen wird, und einem Lade-/Entladungsstrom, der in die Batteriezelle eingegeben/davon ausgegeben wird, ausgewählt werden,

wobei die Pumpensteuerung beinhaltet:

eine Pumpendurchflussgeschwindigkeits-Berechnungseinheit (61), die dazu ausgelegt ist, eine Lade-/Entladungseffizienz der Batteriezelle aus den mindestens zwei Parametern zu berechnen, die von der Messeinheit gemessen werden, und, basierend auf der Lade-/Entladungseffizienz die Durchflussgeschwindigkeit der Pumpe zu bestimmen, so dass der aus der Batteriezelle abgelassene Elektrolyt weder überladen noch tiefenentladen wird, wobei die Lade-/Entladungseffizienz der Batteriezelle eine Änderungsgröße eines Ladezustands des Elektrolyten repräsentiert, die auftritt, während der Elektrolyt durch die Batteriezelle fließt,
eine Pumpendurchflussgeschwindigkeits-Befehlseinheit (62), die dazu ausgelegt ist, die Durchflussgeschwindigkeit in der Pumpe einzustellen, die von der Pumpendurchflussgeschwindigkeits-Berechnungseinheit bestimmt wird, und
eine Klemmenspannungsbestimmungseinheit (64), die zum Bestimmen ausgelegt ist, ob die Klemmenspannung der Batteriezelle eine Obergrenze oder eine Untergrenze eines angegebenen Spannungsbereiches erreicht oder nicht,

wobei die Pumpensteuerung so ausgelegt ist, dass, wenn die Klemmenspannung die Ober- oder Untergrenze des angegebenen Spannungsbereichs erreicht, die Pumpendurchflussgeschwindigkeits-Berechnungseinheit bestimmt, dass die Durchflussgeschwindigkeit der Pumpe um eine angegebene Größe erhöht wird, und
wenn die Klemmenspannung die Ober- oder Untergrenze des angegebenen Spannungsbereichs nicht erreicht, die Pumpendurchflussgeschwindigkeits-Berechnungseinheit die Lade-/Entladungseffizienz der Batteriezelle aus den mindestens zwei Parametern berechnet, die von der Messeinheit gemessen werden, und basierend auf der Lade-/Entladungseffizienz die Durchflussgeschwindigkeit der Pumpe bestimmt, so dass der aus der Batteriezelle abgelassene Elektrolyt weder überladen noch tiefenentladen wird.

2. Redox-Flussbatteriesystem nach Anspruch 1,
wobei die Messeinheit den einlassseitigen Ladezustand des Elektrolyten und den auslassseitigen Ladezustand des Elektrolyten misst, und
die Pumpendurchflussgeschwindigkeits-Berechnungseinheit die Lade-Entladungseffizienz der Batteriezelle aus der Differenz zwischen dem einlassseitigen Ladezustand und dem auslassseitigen Ladezustand berechnet.

3. Redox-Flussbatteriesystem nach Anspruch 1,
wobei die Messeinheit den einlassseitigen Ladezustand des Elektrolyten und den Lade-/Entladungsstrom misst, der in die Batteriezelle eingegeben/davon ausgegeben wird, und
wobei die Pumpendurchflussgeschwindigkeits-Berechnungseinheit die Lade-/Entladungseffizienz der Batteriezelle entsprechend dem Lade-/Entladungsstrom berechnet und die Durchflussgeschwindigkeit der Pumpe basierend auf dem einlassseitigen Ladezustand und der Lade-/Entladungseffizienz bestimmt, so dass der aus der Batteriezelle abgelassene Elektrolyt weder überladen noch tiefenentladen wird.

4. Redox-Flussbatteriesystem nach Anspruch 1,
wobei die Messeinheit den auslassseitigen Ladezustand des Elektrolyten und den Lade-/Entladungsstrom misst, der in die Batteriezelle eingegeben/davon ausgegeben wird, und
wobei die Pumpendurchflussgeschwindigkeits-Berechnungseinheit die Lade-/Entladungseffizienz der Batteriezelle entsprechend dem Lade-/Entladungsstrom berechnet und die Durchflussgeschwindigkeit der Pumpe basierend auf dem auslassseitigen Ladezustand und der Lade-/Entladungseffizienz bestimmt, so dass der aus der Batteriezelle abgelassene Elektrolyt weder überladen noch tiefenentladen wird.

5. Redox-Flussbatteriesystem nach Anspruch 3 oder 4,
wobei die Lade-/Entladungseffizienz der Batteriezelle unter Verwendung eines Zeitdurchschnittswerts oder eines zeitintegrierten Werts des Lade-/Entladungsstroms berechnet wird.

6. Verfahren zum Betreiben einer Redox-Flussbatterie, die einen Elektrolyten aus einem Elektrolytbehälter zu einer Batteriezelle durch Umwälzen unter Verwendung einer Pumpe leitet, um Ladung und Entladung durchzuführen, wobei das Verfahren umfasst:

einen Messschritt, in dem mindestens zwei Parameter gemessen werden, die aus einem einlassseitigen Ladezustand des Elektrolyten, der zu der Batteriezelle geleitet wird, einem auslassseitigen Ladezustand des Elektrolyten, der aus der Batteriezelle abgelassen wird, und einem Lade-/Entladungsstrom, der in die Batteriezelle eingegeben/davon ausgegeben wird, ausgewählt werden,
einen Klemmenspannungsmessschritt zum Messen der Klemmenspannung der Batteriezelle,
einen Klemmenspannungsbestimmungsschritt zum Bestimmen, ob die Klemmenspannungen der Batteriezelle, die in dem Klemmenspannungsmessschritt gemessen werden, die Untergrenze oder die Obergrenze eines angegebenen Spannungsbereiches erreichen oder nicht,
einen Pumpendurchflussgeschwindigkeits-Berechnungsschritt, in dem, wenn in dem Klemmenspannungsbestimmungsschritt bestimmt wird, dass die Klemmenspannung die Ober- oder Untergrenze des angegebenen Spannungsbereichs erreicht, bestimmt wird, dass die Durchflussgeschwindigkeit der Pumpen um eine angegebene Größe erhöht wird, und wenn bestimmt wird, dass die Klemmenspannung die Ober- oder Untergrenze des angegebenen Spannungsbereiches nicht erreicht, eine Lade-/Entladungseffizienz der Batteriezelle aus den mindestens zwei Parametern berechnet wird, die in dem Messschritt gemessen werden, und, basierend auf der Lade-/Entladungseffizienz, eine Durchflussgeschwindigkeit der Pumpe bestimmt wird, so dass der aus der Batteriezelle abgelassene Elektrolyt weder überladen noch tiefenentladen wird, wobei die Lade-/Entladungseffizienz der Batteriezelle eine Änderungsgröße eines Ladezustands des Elektrolyten repräsentiert, die auftritt, während der Elektrolyt durch die Batteriezelle fließt, und einen Pumpendurchflussgeschwindigkeits-Steuerungsschritt, in dem die Durchflussgeschwindigkeit, die in den Pumpendurchflussgeschwindigkeits-Berechnungsschritt bestimmt wird, in der Pumpe eingestellt wird.

## Revendications

1. Système de batterie à flux redox qui comprend :

   un élément de batterie ;
   un réservoir à électrolyte ;
   des tuyaux de circulation par lesquels un électrolyte est fourni entre le réservoir à électrolyte et l'élément de batterie par circulation ; et
   une pompe (40) qui permet à l'électrolyte de circuler à travers les tuyaux de circulation,
   dans lequel le système de batterie à flux redox comprend en outre
   un contrôleur de pompe (60) qui est configuré pour contrôler un débit de la pompe,
   une unité de mesure de tension de borne (54) qui est configurée pour mesurer une tension de borne de l'élément de batterie, et
   une unité de mesure (50) qui est configurée pour mesurer au moins deux paramètres choisis parmi un état de charge côté admission de l'électrolyte fourni à l'élément de batterie, un état de charge côté évacuation de l'électrolyte évacué de l'élément de batterie, et un courant de charge/de décharge fourni à/par l'élément de batterie,
   dans lequel le contrôleur de pompe comprend

   une unité de calcul de débit de pompe (61) qui est configurée pour calculer un rendement de charge/de décharge de l'élément de batterie à partir des aux moins deux paramètres mesurés par l'unité de mesure et, sur la base du rendement de charge/de décharge, pour déterminer le débit de la pompe de sorte que l'électrolyte évacué de l'élément de batterie ne soit ni surchargé, ni sur-déchargé, le rendement de charge/de décharge de l'élément de batterie représentant une quantité de changement d'état de charge de l'électrolyte qui se produit pendant que l'électrolyte passe par l'élément de batterie,
   une unité d'instruction de débit de pompe (62) qui est configurée pour régler, dans la pompe, le débit déterminé par l'unité de calcul de débit de pompe, et
   une unité de détermination de tension de borne (64) qui est configurée pour déterminer si la tension de borne de l'élément de batterie atteint ou non une limite supérieure ou une limite inférieure d'une plage de tensions spécifiée,

   dans lequel le contrôleur de pompe est configuré de sorte que
   lorsque la tension de borne atteint la limite supérieure ou inférieure de la plage de tensions spécifiée, l'unité de calcul de débit de pompe détermine que le débit de la pompe est augmenté selon une quantité spécifiée, et
   lorsque la tension de borne n'atteint pas la limite supérieure ou inférieure de la plage de tensions spécifiée, l'unité de calcul de débit de pompe calcule le rendement de charge/de décharge de l'élément de batterie à partir des au moins deux paramètres mesurés par l'unité de mesure et, sur la base du rendement de charge/de décharge, détermine le débit de la pompe de sorte que l'électrolyte évacué de l'élément de batterie ne soit ni surchargé, ni sur-déchargé.

2. Système de batterie à flux redox selon la revendication 1,
   dans lequel l'unité de mesure mesure l'état de charge côté admission de l'électrolyte et l'état de charge côté évacuation de l'électrolyte, et
   l'unité de calcul de débit de pompe calcule le rendement de charge/de décharge de l'élément de batterie à partir de la différence entre l'état de charge côté admission et l'état de charge côté évacuation.

3. Système de batterie à flux redox selon la revendication 1,
   dans lequel l'unité de mesure mesure l'état de charge côté admission de l'électrolyte et le courant de charge/de décharge fourni à/par l'élément de batterie, et

dans lequel l'unité de calcul de débit de pompe calcule le rendement de charge/de décharge de l'élément de batterie selon le courant de charge/de décharge et détermine le débit de la pompe sur la base de l'état de charge côté admission et du rendement de charge/décharge de sorte que l'électrolyte évacué de l'élément de batterie ne soit ni surchargé, ni sur-déchargé.

4. Système de batterie à flux redox selon la revendication 1,

dans lequel l'unité de mesure mesure l'état de charge côté évacuation de l'électrolyte et le courant de charge/de décharge fourni à/par l'élément de batterie, et

dans lequel l'unité de calcul de débit de pompe calcule le rendement de charge/de décharge de l'élément de batterie selon le courant de charge/de décharge et détermine le débit de la pompe sur la base de l'état de charge côté évacuation et du rendement de charge/de décharge de sorte que l'électrolyte évacué de l'élément de batterie ne soit ni surchargé, ni sur-déchargé.

5. Système de batterie à flux redox selon la revendication 3 ou 4,

dans lequel le rendement de charge/de décharge de l'élément de batterie est calculé à l'aide d'une valeur moyenne de durée ou d'une valeur intégrée de durée du courant de charge/de décharge.

6. Procédé de fonctionnement d'une batterie à flux redox qui fournit un électrolyte entre un réservoir d'électrolyte et un élément de batterie par circulation à l'aide d'une pompe de façon à effectuer une charge et une décharge, le procédé comprenant :

une étape de mesure à laquelle au moins deux paramètres choisis parmi un état de charge côté admission de l'électrolyte fourni à l'élément de batterie, un état de charge côté évacuation de l'électrolyte évacué de l'élément de batterie, et un courant de charge/de décharge fourni à/par l'élément de batterie sont mesurés,

une étape de mesure de tension de borne qui consiste à mesurer la tension de borne de l'élément de batterie,

une étape de détermination de tension de borne qui consiste à déterminer si les tensions de bornes de l'élément de batterie mesurées à l'étape de mesure de tension de borne atteignent ou non la limite inférieure ou la limite supérieure d'une plage de tensions spécifiée,

une étape de calcul de débit de pompe à laquelle, lorsqu'il est déterminé à l'étape de détermination de tension de borne que la tension de borne atteint la limite supérieure ou inférieure de la plage de tensions spécifiée, il est déterminé que les débits des pompes sont augmentés selon une quantité spécifiée, et, lorsqu'il est déterminé que la tension de borne n'atteint pas la limite supérieure ou inférieure de la plage de tensions spécifiée, un rendement de charge/de décharge de l'élément de batterie est calculé à partir des au moins deux paramètres mesurés à l'étape de mesure et, sur la base du rendement de charge/de décharge, un débit de la pompe est déterminé de sorte que l'électrolyte évacué de l'élément de batterie ne soit ni surchargé, ni sur-déchargé, le rendement de charge/de décharge de l'élément de batterie représentant une quantité de changement d'état de charge de l'électrolyte qui se produit pendant que l'électrolyte passe par l'élément de batterie, et

une étape de contrôle de débit de pompe à laquelle le débit déterminé à l'étape de calcul de débit de pompe est réglé dans la pompe.

# FIG. 1

25 : 26, 27
35 : 36, 37
50 : 51, 52, 53

# FIG. 2

START

MEASURE INLET SOC, OUTLET SOC,
AND CHARGE/DISCHARGE CURRENT — S1

CALCULATE
CHARGE/DISCHARGE
EFFICIENCY — S2-1

S2-2

OUTLET SOC > $SOC_{MAX}$
OR
OUTLET SOC < $SOC_{MIN}$?

Yes          No

S2-3                                         S2-3'

INCREASE PUMP
FLOW RATE

DECREASE PUMP
FLOW RATE

SET FLOW RATE
OF PUMP — S3

# FIG. 3

25:26, 27
35:36, 37
50:51, 52, 53

# FIG. 4

```
                    ( START )
                        │
                        ▼                                    S1
        ┌───────────────────────────────────┐
        │ MEASURE INLET SOC, OUTLET SOC,     │
        │ AND CHARGE/DISCHARGE CURRENT       │
        └───────────────────────────────────┘
                        │
                        ▼                          S4
              ┌──────────────────────┐
              │     MEASURE          │
              │ TERMINAL VOLTAGE Vt  │
              └──────────────────────┘
                        │
                        ▼                      S5
                    ╱         ╲
          Yes     ╱   Vt < Vmin  ╲
       ◄─────────    or           
   S2-4           ╲   Vt> Vmax?  ╱
       │            ╲         ╱
       ▼                 │ No
 ┌───────────┐           ▼              S2-1
 │ INCREASE  │   ┌──────────────────┐
 │ PUMP FLOW │   │   CALCULATE      │
 │ RATE (2)  │   │ CHARGE/DISCHARGE │
 └───────────┘   │   EFFICIENCY     │
       │         └──────────────────┘
       │                 │
       │                 ▼                  S2-2
       │      S2-3    ╱           ╲
       │      Yes   ╱ OUTLET SOC >   ╲  No
       │      ◄────  SOC_MAX OR       ────►
       │           ╲ OUTLET SOC <    ╱
       │             ╲ SOC_MIN?    ╱
       │               ╲         ╱
       │        ▼                    ▼
       │   ┌──────────┐         ┌──────────┐
       │   │ INCREASE │         │ DECREASE │
       │   │ PUMP FLOW│         │ PUMP FLOW│
       │   │   RATE   │         │   RATE   │
       │   └──────────┘         └──────────┘
       │        │                    │   S2-3'
       │        └────────┬───────────┘
       └─────────────────┤
                         ▼
              ┌──────────────────┐
              │  SET FLOW RATE   │         S3
              │    OF PUMP       │
              └──────────────────┘
                         │
                         └──────────────► (back to S1)
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006114359 A
- JP 2003317763 A
- WO 2008148148 A1
- WO 9003666 A1
- US 8277964 B2